(19) Europäisches Patentamt
European Patent Office
Office européen des brevets

(11) Numéro de publication: **0 479 664 B1**

# (12) FASCICULE DE BREVET EUROPEEN

(45) Date de publication de fascicule du brevet: **17.05.95**

(51) Int. Cl.[6]: **C07F 17/02**

(21) Numéro de dépôt: **91402611.7**

(22) Date de dépôt: **01.10.91**

## (54) Procédé de synthèse de monohalogénoalcanoylferrocènes.

(30) Priorité: **03.10.90 FR 9012157**

(43) Date de publication de la demande:
**08.04.92 Bulletin 92/15**

(45) Mention de la délivrance du brevet:
**17.05.95 Bulletin 95/20**

(84) Etats contractants désignés:
**DE GB IT NL SE**

(56) Documents cités:
**DE-B- 1 161 560**
**FR-A- 2 352 825**
**FR-A- 2 352 826**

(73) Titulaire: **SOCIETE NATIONALE DES POUDRES ET EXPLOSIFS**
**12, quai Henri IV**
**F-75181 Paris Cédex 04 (FR)**

(72) Inventeur: **Caubere, Paul**
**11, rue de Serre**
**F-54000 Nancy (FR)**
Inventeur: **Fort, Yves**
**7, Square de Liège Résidence Montet Octroi**
**F-54500 Vandoeuvre les Nancy (FR)**
Inventeur: **Gautier, Jean-Claude**
**1, rue Brossolette**
**F-94480 Ablon sur Seine (FR)**
Inventeur: **Mondet, Jean-Claude**
**8, Domaine du Guichet**
**F-91710 Vert le Petit (FR)**

(74) Mandataire: **Pech, Bernard et al**
**SNPE - Service Propriété Industrielle**
**12, Ouai Henri IV**
**F-75181 Paris Cédex 04 (FR)**

**EP 0 479 664 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne les monohalogénoalcanoylferrocènes, et plus particulièrement le chloro-4 butyroylferrocène. Elle a pour objet un nouveau procédé de synthèse de ces composés qui sont notamment des intermédiaires de synthèse dans des domaines aussi divers que la pharmacie et l'autopropulsion.

Le brevet français FR 2.259 598 décrit par exemple le chloro-4 butyroylferrocène, le chloropropionylferrocène, le chloroacétylferrocène, le bromopentanoylferrocène et le bromohexanoylferrocène comme intermédiaires de synthèse de dérivés ferrocéniques utilisés comme médicaments, en particulier comme agents hématiques.

Dans le domaine de l'autopropulsion les monohalogénoalcanoylferrocènes sont des intermédiaires de synthèse notamment de composés silylferrocéniques, utilisés par exemple comme catalyseur de combustion. Les brevets FR 2.567 890 et FR 2.567 895, dont la Demanderesse est titulaire, décrivent par exemple et respectivement des composés silylferrocéniques et des polymères à insaturations éthylèniques comportant des groupements silylferrocènes utilisés dans ce but.

Toutefois l'utilisation de monohalogénoalcanoylferrocènes comme intermédiaires dans la synthèse de ces dérivés silylferrocèniques est actuellement très limitée du fait de la présence, en quantité relativement importante, de ferrocène et de di (monohalogénoalcanoyl)-1,1' ferrocène comme impuretés dans les monohalogénoalcanoylferrocènes bruts de synthèse obtenus selon le procédé classique "Friedel et Crafts" à partir de ferrocène et d'un halogénure ou anhydride d'acide carboxylique. Or le ferrocène résiduel a tendance à se sublimer puis à se déposer sur toutes les parois froides (pièges, canalisations...) au cours des étapes ultérieures et la présence de di (monohalogénoalcanoyl)-1,1' ferrocène conduit à des polymères ferrocéniques de mauvaise qualité du fait de sa difonctionnalité qui entraine une réticulation inopportune.

Il est par ailleurs très difficile et coûteux de purifier les monohalogénoalcanoylferrocènes bruts de synthèse obtenus après filtration du catalyseur et évaporation du solvant.

L'homme du métier est donc à la recherche d'un perfectionnement au procédé "Friedel et Crafts" précité, permettant d'obtenir, avec un rendement très élevé, un monohalogénoalcanoylferrocène brut de synthèse ayant une pureté très élevée et contenant notamment, en poids, moins de 3 % environ de di (monohalogénoalcanoyl)-1,1 ferrocène et moins de 3 % environ de ferrocène.

Les brevets français FR 2.352 825 et FR 2.352 826 décrivent la synthèse respectivement de 3,5,5-triméthylhexanoylferrocène et de cycloalcénoylferrocènes, selon la méthode "Friedel et Crafts" par réaction du ferrocène avec un chlorure d'acide, en milieu $CH_2Cl_2$ et en présence d'$AlCl_3$ comme catalyseur. Selon une variante, on verse goutte à goutte, dans une solution de ferrocène dans $CH_2Cl_2$, un mélange de chlorure d'acide et d'$AlCl_3$ dans le $CH_2Cl_2$. La température de réaction est 15 °C et le chlorure d'acide et $AlCl_3$ sont présents en même quantité molaire (110 % molaire par rapport au ferrocène). Le produit brut de synthèse ainsi obtenu est impur et fait l'objet d'un traitement relativement complexe de cristallisation puis lavages au méthanol, puis de récupération à partir du méthanol de lavage pour obtenir un produit pur avec un bon rendement.

La Demanderesse a découvert que, de façon inattendue, on obtenait un produit brut de synthèse, ayant une pureté en général voisine de 95 %, contenant moins de 3 % de ferrocène et moins de 3 % de di (monohalogénoalcanoyl) -1,1' ferrocène avec un rendement en général de l'ordre ou supérieur à 90 %, par combinaison de conditions opératoires bien précises, notamment en ce qui concerne la température, la concentration et la quantité des réactifs.

Le procédé selon l'invention de synthèse de monohalogénoalcanoylferrocènes de formule générale (I)

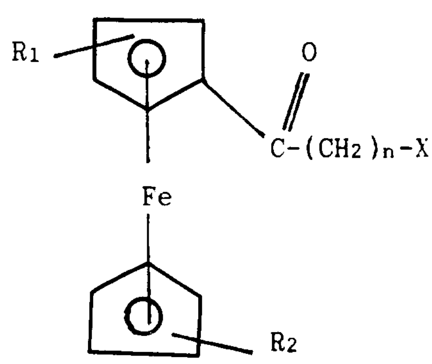

dans laquelle
X représente le chlore ou le brome, de préférence le chlore, n est un nombre entier tel que 2≦n≦7, de préférence tel que 3≦n≦7, et plus particulièrement n = 3,
$R_1$ et $R_2$, identiques ou différents, représentent l'hydrogène ou une chaine alkyle comportant 1 à 8 atomes de carbone, est caractérisé en ce qu'on fait réagir, à une température $\theta_r$ comprise entre -5 °C et + 15 °C, de préférence voisine de O °C, en présence de chlorure d'aluminium comme catalyseur, un dérivé ferrocénique de formule générale (II)

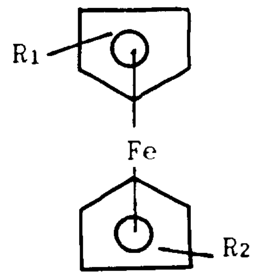

dans laquelle $R_1$ et $R_2$ ont la signification précitée, avec un halogénure ou l'anhydride, de préférence le chlorure, d'un acide de formule générale (III) $HOOC{-}(CH_2)_n{-}X$, X et n ayant la signification précitée.

Pour mettre en oeuvre cette réaction on prépare tout d'abord une solution acylante par mélange, dans le chlorure de méthylène, de $AlCl_3$ et de l'halogénure ou l'anhydride de l'acide (III). La température $\theta a$ de cette solution acylante est inférieure à $\theta_r$ de façon telle que 5 °C $\leq \theta_r - \theta a \leq$ 15 °C.
La concentration de l'halogénure ou l'anhydride d'acide est de préférence supérieure à 0,9 M.
Cette solution acylante est progressivement additionnée à une solution de concentration de préférence comprise entre 0,25 et 0,6M, par exemple voisine de 0,5 M, du dérivé ferrocénique (II) dans le chlorure de méthylène.

Le rapport molaire entre l'halogénure ou l'anhydride de l'acide (III) et le dérivé ferrocénique (II) est compris entre 0,99 et 1,01 et le rapport molaire entre le chlorure d'aluminium et le dérivé ferrocénique (II) est compris entre 1,05 et 1,11, de préférence voisin de 1,10.

On hydrolyse ensuite le milieu réactionnel pour récupérer une phase organique puis on récupère le produit de formule (I) recherché par filtration de cette phase organique pour éliminer le chlorure d'aluminium en suspension puis évaporation du chlorure de méthylène, par exemple sous vide partiel et/ou léger chauffage.

De façon préférée, $R_1$ et $R_2$, identiques ou différents, représentent l'hydrogène, une chaine méthyle ou une chaine éthyle. De façon particulièrement préférée, $R_1$ et $R_2$ représentent l'hydrogène. Selon cette dernière variante, on préfère notamment le chloro-4 butyroylferrocène pour lequel X représente le chlore et n = 3.

Selon une autre variante préférée du procédé selon l'invention $\theta_r - \theta a$ est voisin de 10 °C.

En général la durée d'addition de la solution acylante est comprise entre 0,5h et 5h, de préférence comprise entre 1h et 3h.

Par ailleurs , la Demanderesse a découvert que lorsque la solution du dérivé ferrocénique (II) dans $CH_2Cl_2$ contient également un sel céreux, notamment un halogénure et plus particulièrement le chlorure, on diminuait considérablement la teneur en ferrocène résiduel et qu'on pouvait ainsi, sans perte de rendement, obtenir un produit brut de réaction ayant une pureté voisine de 98 %. Le résultat est particulièrement inattendu du fait que les sels céreux, tout comme le ferrocène, sont réducteurs, et n'a pas trouvé d'explication.

De façon préférée, le sel céreux est présent entre 1 et 15 % en mole par rapport au dérivé ferrocénique (II).

Les exemples non limitatifs suivants illustrent l'invention et les avantages quelle procure.

Exemples 1 à 4 : Synthèse selon l'invention du chloro-4 butyroylferrocène.

Exemple 1 :

a) préparation de la solution acylante

Dans un réacteur muni d'un réfrigérant, d'une ampoule de coulée et d'un thermomètre, on met 7,37 g (55 mmol) de $AlCl_3$ en suspension dans 20 ml de $CH_2Cl_2$, à température ambiante (20 °C environ) et sous atmosphère d'azote.
On ajoute ensuite, goutte à goutte par l'intermédiaire de l'ampoule de coulée, en 30 min environ, une solution de 7,05 g (50 mmol) du chlorure de l'acide chloro-4 butyrique dans 20 ml de $CH_2Cl_2$.
On agite la suspension durant 2 h à température ambiante.
Après cette période tout le chlorure d'aluminium est dissous et la solution obtenue, de couleur jaune clair, est limpide.

b) Addition de la solution acylante sur le ferrocène

On additionne progressivement, par l'intermédiaire d'une ligne de transfert reliée à une pompe, la solution acylante préalablement refroidie à $\theta a = -10$ °C, dans un réacteur sous azote contenant 9,30 g de ferrocène (50 mmol) en solution dans 120 ml de $CH_2Cl_2$, à 0 °C ($\theta_r$). La durée d'addition de la solution acylante est de 2,5 h. On laisse ensuite le milieu réactionnel revenir à la température ambiante.

c) Hydrolyse et récupération du produit brut

On coule ensuite le milieu réactionnel sur 500 g de glace. On recueille la phase organique puis on extrait 2 fois la phase aqueuse par 150 ml de $CH_2Cl_2$. On regroupe les phases organiques. On les lave 2 fois par une solution aqueuse saturée en $NaHCO_3$ puis on les sèche sur $MgSO_4$.
Après filtration puis évaporation du chlorure de méthylène, on a obtenu du chloro-4 butyroylferrocène brut de synthèse avec un rendement de 93,8 % par rapport au ferrocène de départ.
Ce chloro-4 butyroylferrocène brut isolé a une pureté de 96 % et contient en poids 2 % de ferrocène et 2 % de di (chloro-4 butyroyl)-1,1' ferrocène (dosages réalisés par chromatographie en phase gazeuse et par chromatographie liquide haute pression)

Exemple 2 :

On opère de la même façon que pour l'exemple 1 mais la solution de ferrocène dans le chlorure de méthylène contient 1,23 g de chlorure céreux (5 mmol).
On obtient le chloro-4 butyroylferrocène brut avec un rendement de 93,2 %. Sa pureté est de 97,7 % et il contient en poids 0,4 % de ferrocène et 1,9 % de di (chloro-4 butyroyl)-1,1' ferrocène.

Exemples 3 et 4 :

On opère de la même façon que pour l'exemple 1 mais on utilise 52,5 mmol de $AlCl_3$ pour l'exemple 3 et 54 mmol de $AlCl_3$ pour l'exemple 4 au lieu de 55 mmol.
Le chloro-4 butyroylferrocène brut isolé contient 2,5 % de ferrocène et 2,2 % de di (chloro-4 butyroyl)-1,1' ferrocène pour l'exemple 3 (pureté 95,3 %) et 3,4 % de ferrocène et 2,7 % de di (chloro-4 butyroyl)-1,1' ferrocène pour l'exemple 4 (pureté 94 %).
Les rendements sont respectivement de 91 % et 89 %.

Exemples 5 à 13 : Synthèse de chloro-4 butyroylferrocène. Essais comparatifs.

Ces essais comparatifs ne font pas partie de l'invention et ont pour but de montrer que la sélection de paramètres selon l'invention n'est pas arbitraire et qu'elle est nécessaire pour procurer l'effet technique permettant de résoudre le problème précité.

Exemples comparatifs 5 à 9 : Influence de la quantité de $AlCl_3$ et du chlorure d'acide par rapport au ferrocène.

On opère de la même façon que pour l'exemple 1 selon l'invention mais en modifiant les quantités d'$AlCl_3$ et/ou du chlorure d'acide, de façon à obtenir les rapports molaires suivants Ferrocène/chlorure d'acide/$AlCl_3$ respectivement :
exemple 5 : 1,00/1,00/1,12
exemple 6 : 1,00/1,00/1,15
exemple 7 : 1,00/0,90/1,10
exemple 8 : 1,00/0,95/1,045
exemple 9 : 1,00/1,10/1,20
Le rendement et la pureté du chloro-4 butyroylferrocène brut isolé sont précisés au tableau 2 suivent pour chacun de ces exemples, comparativement à l'exemple 1 selon l'invention.

| EX | RENDEMENT (%) | PURETE (% EN POIDS) | FERROCENE RESIDUEL (% EN POIDS) | DI(CHLORO-4BUTYROYL)--1,1'FERROCENE RESIDUEL (% EN POIDS) |
|---|---|---|---|---|
| 1 | 93,8 | 96 | 2,0 | 2,0 |
| 5 | 85,4 | 91 | 4,3 | 4,6 |
| 6 | 84,1 | 88,5 | 4,6 | 6,8 |
| 7 | 93,6 | 90,3 | 8,4 | 1,3 |
| 8 | 87,6 | 92,5 | 6,1 | 1,4 |
| 9 | 77,9 | 85 | 0,8 | 14,1 |

Exemples comparatifs 10 à 13 : Influence de la température $\theta_r$ de réaction et/ou de la température $\theta a$ de la solution acylante

On opère de la même façon que pour l'exemple 1 selon l'invention mais en modifiant $\theta_r$ et/ou $\theta_a$ de la façon suivante :
exemple 10 : $\theta_r = \theta_a$ = température ambiante, voisine de 20 °C
exemple 11 : $\theta_r = \theta_a$ = 12 - 15 °C
exemple 12 : $\theta_a$ = 0 °C
exemple 13 : $\theta_a$ = -25 °C
Le rendement et la pureté du chloro-4 butyroylferrocène brut isolé sont précisés au tableau 2 suivant pour chacun de ces exemples, comparativement à l'exemple 1 selon l'invention.

| EX | RENDEMENT (%) | PURETE (% EN POIDS) | FERROCENE RESIDUEL (% EN POIDS) | BIS(CHLORO-4BUTYROYL) FERROCENE RESIDUEL (% EN POIDS) |
|---|---|---|---|---|
| 1 | 93,8 | 96 | 2,0 | 2,0 |
| 10 | 84,3 | 90 | 3,0 | 7,0 |
| 11 | 85,1 | 90 | 4,0 | 6,1 |
| 12 | 86,1 | 92 | 4,0 | 4,0 |
| 13 | 85,1 | 93 | 7,1 | 0,0 |

exemple 14 : Synthèse du chloro-4 butyroyl, ethylferrocène

On opère selon les conditions opératoires de l'exemple 1 en utilisant 50 mmol d'éthylferrocène au lieu de 50 mmol de ferrocène. On obtient un produit brut de synthèse constitué d'un mélange d'isomères du

chloro-4 butyroyl, éthylferrocène.

Le produit brut, obtenu avec un rendement de 89 %, contient 1 % en poids d'éthylferrocène et 3 % en poids de di (chloro-4 butyroyl)-1, 1' éthylferrocène.

## Revendications

**1.** Procédé de synthèse de monohalogénoalcanoylferrocènes de formule générale (I)

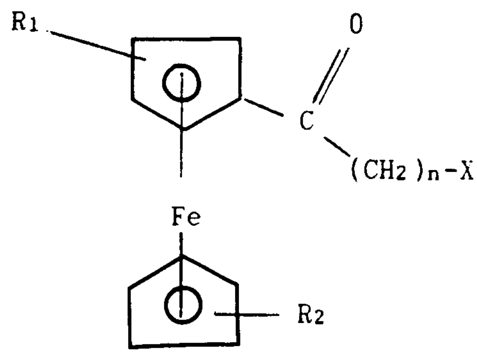

dans laquelle
X représente le chlore ou le brome,
n est un nombre entier tel que $2 \leqq n \leqq 7$,
$R_1$ et $R_2$, identiques ou différents, représentent l'hydrogène ou une chaine alkyle comportant 1 à 8 atomes de carbone, caractérisé en ce qu'on fait reagir, à une température $\theta_r$ comprise entre -5 °C et +15 °C, en présence de chlorure d'aluminium comme catalyseur, un dérivé ferrocénique de formule générale (II)

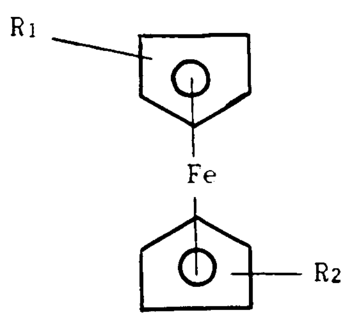

dans laquelle $R_1$ et $R_2$ ont la signification précitée,
avec un halogénure ou l'anhydride d'un acide de formule générale (III) $HOOC-(CH_2)_n-X$, X et n ayant la signification précitée,
une solution acylante, obtenue par mélange dans le chlorure de méthylène de $AlCl_3$ et de l'halogénure ou l'anhydride d'acide (III) et dont la température $\theta_a$, inférieure à $\theta_r$, est telle que $5\,°C \leqq \theta_r - \theta_a \leqq 15\,°C$, étant progressivement additionnée à une solution du dérivé ferrocénique (II) dans le chlorure de méthylène, le rapport molaire entre l'halogénure ou l'anhydride d'acide et le dérivé ferrocénique étant compris entre 0,99 et 1,01 et le rapport molaire entre le chlorure d'aluminium et le dérivé ferrocénique étant compris entre 1,05 et 1,11,
en ce qu'on hydrolyse ensuite le milieu réactionnel pour récupérer une phase organique,
et en ce qu'on récupère le produit de formule (I) recherché par filtration de cette phase organique puis évaporation du chlorure de méthylène.

**2.** Procédé selon la revendication 1 caractérisé en ce que la concentration de l'halogénure ou l'anhydride de l'acide (III) dans la solution acylante est supérieure à 0,9 M et en ce que la concentration du dérivé ferrocénique (II) dans $CH_2Cl_2$ est comprise entre 0,25 M et 0,6 M.

3. Procédé selon l'une quelconque des revendications 1 et 2 caractérisé en ce que $R_1$ et $R_2$, identiques ou différents, représentent l'hydrogène, une chaine méthyle ou une chaine éthyle.

4. Procédé selon l'une quelconque des revendications précédentes caractérisé en ce que l'halogénure ou l'anhydride d'acide est un chlorure d'acide.

5. Procédé selon l'une quelconque des revendications précédentes caractérisé en ce que X représente le chlore.

6. Procédé selon l'une quelconque des revendications précédentes caractérisé en ce que $R_1$ et $R_2$ représentent l'hydrogène, X le chlore et en ce que n est égal à 3.

7. Procédé selon l'une quelconque des revendications précédentes caractérisé en ce que la température de réaction est 0 °C, le rapport molaire entre l'halogénure ou l'anhydride d'acide et le dérivé ferrocénique est de 1,00 et le rapport molaire entre le chlorure d'aluminium et le dérivé ferrocénique est de 1,10.

8. Procédé selon l'une quelconque des revendications précédentes caractérisé en ce que la durée d'addition de la solution acylante est comprise entre 1h et 3h.

9. Procédé selon l'une quelconque des revendications précédentes caractérisé en ce que la solution du dérivé ferrocénique (II) dans le chlorure de méthylène contient un sel céreux, de préférence le chlorure céreux.

10. Procédé selon la revendication 9 caractérisé en ce que le sel céreux est présent entre 1 à 15 % en mole par rapport au dérivé ferrocénique (II).

**Claims**

1. Process for the synthesis of monohaloalkanoylferrocenes of general formula (I)

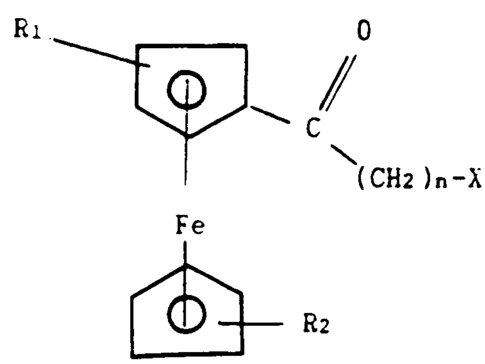

in which
X denotes chlorine or bromine,
n is an integer such that $2 \leq n \leq 7$,
$R_1$ and $R_2$, which are identical or different, denote hydrogen or an alkyl chain containing 1 to 8 carbon atoms, characterized in that a ferrocene derivative of general formula (II)

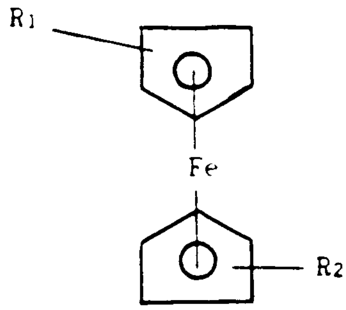

in which $R_1$ and $R_2$ have the abovementioned meaning, is reacted at a temperature $\theta_r$ of between -5 °C and +15 °C, in the presence of aluminium chloride as catalyst, with a halide or the anhydride of an acid of general formula (III) $HOOC-(CH_2)_n-X$, X and n having the abovementioned meaning,
an acylating solution obtained by mixing $AlCl_3$ and the halide or the anhydride of acid (III) in methylene chloride and whose temperature $\theta_a$, lower than $\theta_r$, is such that $5\,°C \leqq \theta_r - \theta_a \leqq 15\,°C$, being progressively added to a solution of the ferrocene derivative (II) in methylene chloride, the molar ratio of the acid halide or anhydride to the ferrocene derivative being between 0.99 and 1.01 and the molar ratio of aluminium chloride to the ferrocene derivative being between 1.05 and 1.11,
in that the reaction mixture is then hydrolysed to recover an organic phase,
and in that the required product of formula (I) is recovered by filtering this organic phase and then evaporating off the methylene chloride.

**2.** Process according to Claim 1, characterized in that the concentration of the halide or the anhydride of the acid (III) in the acylating solution is higher than 0.9 M and in that the concentration of the ferrocene derivative (II) in $CH_2Cl_2$ is between 0.25 M and 0.6 M.

**3.** Process according to either of Claims 1 and 2, characterized in that $R_1$ and $R_2$, which are identical or different, denote hydrogen, a methyl chain or an ethyl chain.

**4.** Process according to any one of the preceding claims, characterized in that the acid halide or anhydride is an acid chloride.

**5.** Process according to any one of the preceding claims, characterized in that X denotes chlorine.

**6.** Process according to any one of the preceding claims, characterized in that $R_1$ and $R_2$ denote hydrogen, X denotes chlorine and in that n is equal to 3.

**7.** Process according to any one of the preceding claims, characterized in that the reaction temperature is 0 °C, the molar ratio of the acid halide or anhydride to the ferrocene derivative is 1.00 and the molar ratio of aluminium chloride to the ferrocene derivative is 1.10.

**8.** Process according to any one of the preceding claims, characterized in that the addition period of the acylating solution is between 1 h and 3 h.

**9.** Process according to any one of the preceding claims, characterized in that the solution of the ferrocene derivative (II) in methylene chloride contains a cerous salt, preferably cerous chloride.

**10.** Process according to Claim 9, characterized in that the cerous salt is present at between 1 and 15 mol% in relation to the ferrocene derivative (II).

## Patentansprüche

1. Verfahren zur Herstellung von Monohalogenalkanoylferrocenen der allgemeinen Formel

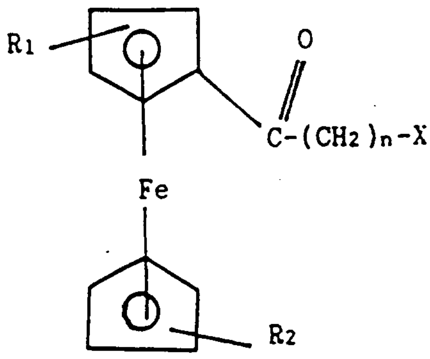

(I),

in der bedeuten:
- X Chlor oder Brom,
- n eine ganze Zahl, die der Bedingung $2 \leqq n \leqq 7$ genügt,
- $R_1$ und $R_2$, die gleich oder verschieden sind, Wasserstoff oder eine Alkylgruppe mit 1 bis 8 Kohlenstoffatomen,

gekennzeichnet durch folgende Schritte:
- Umsetzung eines Ferrocenderivats der allgemeinen Formel

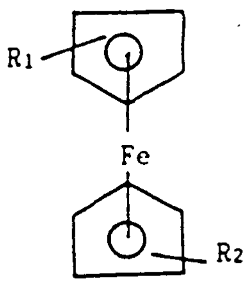

(II),

in der $R_1$ und $R_2$ dasselbe wie oben bedeuten, bei einer Temperatur $\theta_r$ von -5 °C bis +15 °C in Gegenwart von Aluminiumchlorid als Katalysator mit einem Säurehalogenid oder dem Säureanhydrid einer Säure der allgemeinen Formel
$HOOC-(CH_2)_n-X$ (III),

in der X und n dasselbe wie oben bedeuten, wobei eine Acylierungslösung, die durch Mischen von $AlCl_3$ mit dem Säurehalogenid oder Säureanhydrid der Säure (III) in Methylenchlorid erhalten wird und deren Temperatur $\theta_a$, die unter $\theta_r$ liegt, so gewählt ist, daß sie der Bedingung $5\ °C \leqq \theta_r - \theta_a \leqq 15\ °C$ genügt, nach und nach einer Lösung des Ferrocenderivats (II) in Methylenchlorid zugesetzt wird, wobei das Molverhältnis Säurehalogenid/Ferrocenderivat oder Säureanhydrid/Ferrocenderivat 0,99 bis 1,01 und das Molverhältnis Aluminiumchlorid/Ferrocenderivat 1,05 bis 1,11 beträgt,
- anschließende Hydrolyse des Reaktionsgemischs zur Gewinnung einer organischen Phase, und
- Gewinnung des gewünschten Produkts der Formel (I) durch Filtration dieser organischen Phase und anschließende Verdampfung des Methylenchlorids.

2. Verfahren nach Anspruch 1, dadurch gekennzeichnet, daß die Konzentration der Acylierungslösung an Säurehalogenid oder Säureanhydrid der Säure (III) größer als 0,9 M ist und das Ferrocenderivat (II) in $CH_2Cl_2$ in einer Konzentration von 0,25 M bis 0,6 M enthalten ist.

3. Verfahren nach einem der Ansprüche 1 und 2, dadurch gekennzeichnet, daß $R_1$ und $R_2$, die gleich oder verschieden sind, Wasserstoff, eine Methylgruppe oder eine Ethylgruppe darstellen.

4. Verfahren nach einem der vorhergehenden Ansprüche, dadurch gekennzeichnet, daß das Säurehalogenid oder Säureanhydrid ein Säurechlorid ist.

5. Verfahren nach einem der vorhergehenden Ansprüche, dadurch gekennzeichnet, daß X Chlor ist.

6. Verfahren nach einem der vorhergehenden Ansprüche, dadurch gekennzeichnet, daß $R_1$ und $R_2$ Wasserstoff darstellen, und X Chlor darstellt und n gleich 3 ist.

7. Verfahren nach einem der vorhergehenden Ansprüche, dadurch gekennzeichnet, daß die Reaktionstemperatur 0 °C beträgt, das Molverhältnis Säurehalogenid/ Ferrocenderivat oder Säureanhydrid/Ferrocenderivat 1,00 und das Molverhältnis Aluminiumchlorid/Ferrocenderivat 1,10 beträgt.

8. Verfahren nach einem der vorhergehenden Ansprüche, dadurch gekennzeichnet, daß die Acylierungslösung während einer Zeitdauer von 1 bis 3 h zugesetzt wird.

9. Verfahren nach einem der vorhergehenden Ansprüche, dadurch gekennzeichnet, daß die Lösung des Ferrocenderivats (II) in Methylenchlorid ein Cer(III)-Salz, vorzugsweise Cer(III)-chlorid, enthält.

10. Verfahren nach Anspruch 9, dadurch gekennzeichnet, daß das Cer(III)-Salz in einem Anteil von 1 bis 15 Mol-%, bezogen auf das Ferrocenderivat (II), enthalten ist.